# EUROPEAN PATENT SPECIFICATION

(11) **EP 1 489 452 B1**
(45) Date of publication and mention of the grant of the patent: **26.07.2006**
(21) Application number: 03253823.3
(22) Date of filing: 17.06.2003
(51) Int. Cl.: G02C 5/22

(54) **Screwless hinge structure for eyeglasses**
Scharnier ohne Schraube für eine Brillenfassung
Charnière sans vis pour monture de lunettes

(43) Date of publication of application: 22.12.2004
(73) Proprietor: Concept Eyewear Manufacturer Limited, Kwun Tong, Kowloon Hong Kong (CN)
(72) Inventor: Mung, Chi Kong, Kwun Tong, Kowloon, Hong Kong (CN)
(74) Representative: Powell, Timothy John

(56) References cited:
- EP-A- 0 330 713
- DE-A- 4 306 502
- GB-A- 1 295 023
- US-A- 4 153 347
- US-A- 5 367 346
- US-A- 5 797 173

## Description

### Field of Invention

The present invention relates to a screwless hinge structure for eyeglasses. More specifically, the present invention relates to screwless hinges each for joining a front or lens rim and a temple together in eyeglasses.

### Background of the Invention

In recent years, more and more people favor the kind of eyeglasses that is simple but stylish, light weighted, and that is made of metals such as titanium, titanium alloy, stainless steel and copper alloy, with a thickness about 0.5 -1.0mm. People want to wear the eyeglasses with a frame that is totally made of metal with no screws and/or welding. However, until now, not so many such frames are available in the market which can satisfy the demand. Especially, conventional hinges, e.g., hinges coupled with welding, spring hinges, are still the mainstream to connect the front/lens rim and the temples.

At present, there is a kind of eyeglasses in the market that its hinge structure has no screw or welding. The hinge structure has a first portion connected to the front/lens rim, and a second portion connected to the temple. The second portion is coupled with the first portion, and thus it can rotate relatively to the first portion. EP 0,330,713 discloses a connector composed principally of two fixed frames which are separately formed by the direct punching of elastic steel, on the upper and lower convex plates of which a middle hole is set, and on the interior wall of the upper and the lower wedge plates of the lateral fixed frame of which two convex projections are set. At the time of assembly, the convex plate of the front fixed frame is pushed into the space which lies between the two wedge plates on the front end of the lateral fixed plate, so that the two convex projections set on the interior wall of the upper and the lower wedges will be squeezed into the middle hole on the convex plate of the front fixed plate without dropping out, ensuring both easy assembly and convenient application. However, such hinge structure has some deficiencies. After using a period of time, the second portion of the hinge may become loose contact with the first portion to have obvious sway, due to the hinge structure cannot sustain a balanced tension force as before. Thus, when using the first portion and the second portion to form a hinge structure, the hinge has limited capability to prevent deforming and/or twisting. To overcome the above deficiency, the manufacturer adopted some measures to strengthen the hinges from deforming after being used for a certain time. For example, the manufacturer uses a pair of hinges to connect the front and each temple, so as to enhance the strength of the hinge structure. However, such measures make the size of the hinge structure rather big, which affects the whole frame looking.

Therefore, there is a need to provide a hinge structure that not only has no screws and/or welding, but also has a relatively small size and enhanced capability to prevent deforming and/or twisting. This hinge structure has portions to connect to the front/lens rim and the temples respectively, each of which is made in one piece of metal. In addition, such a hinge structure can be used in various spectacles frames, such as full-frame, half-frame, rimless frame, and plastic frame. Eyeglasses with the hinge structure are light weighted, sharp looking, simple yet stylish.

US 5,797,173 discloses a method for fabrication of an eyeglass hinge with a twin roller hingepart comprising two legs and a base surface, wherein the hinge part is punched out of a strip shaped material and is subsequently bent into a U-shape.

### Summary of the Invention

To overcome the limitations of the related art described above, and to overcome other limitations that will become apparent upon reading and understanding the present application, this invention provides a screwless hinge structure that has no screws and/or welding. In addition, the hinge structure provides an enhanced capability to prevent deforming and/or twisting after being used for a certain time. The hinge structure of the present invention can be used in various frames of eyeglasses, e.g., full-frame, half-frame, rimless frame, and plastic frame. The hinge structure also provides a smaller size so as to make the spectacles frame look more exquisite.

According to the invention there is provided a screwless hinge for spectacles comprising:
a front hinge member arranged to be secured to a front frame portion of said spectacles and having two parallel lobes, two cylindrical projections projecting towards each other from said lobes such as to define a hinge axis,
a temple member comprising in its front end a longitudinally orientated slot and on either side of said slot an eyelet arranged in parallel to said slot such yes to form a rear hinge member,said projections rotatably fitting into said eyelets such as to allow folding and unfolding of the temple member.

Yet in one embodiment of the present invention, the slot is in the middle of the rear hinge member, and is about 3.5 - 5.0mm long with 0.2 - 0.5mm wide. Further, a plastic washer is provided between the eyelets of the rear hinge member to enhance the strength of the hinge and to strengthen the hinge from deforming and/or twisting. The plastic washer has two spherical protruded end faces each of which is coupled to the corresponding eyelet of the rear hinge member. In addition, when a high coefficient material is used to form the hinge structure, such as titanium or titanium alloy, a stainless steel washer is further provided between the front hinge member and the rear hinge member to separate them from rubbing with each other.

With such a structure, the present invention provides a no-screw and/or no-welding, simple structure and small sized hinge. The hinge has strength to prevent deforming/twisting.

The present invention also provides a pair of eyeglasses with screwless hinge structure. The eyeglasses include a pair of lens, and a frame having a front/lens rim for retaining the lens and engaging a nose of a wearer, and a pair of temple members for elastically fitting to the wearer. The frame further has screwless hinges each for joining the front/lens rim and the temple member. The screwless hinge includes a front hinge member having circular projections at one end and being secured to the front at the other end, and a rear hinge member provided at one end of the temple member having eyelets corresponding to the circular projections. The rear hinge member has a slot therein at the one end of the temple member. The circular projections of the front hinge member are fitted into the eyelets of the rear hinge member so that the rear hinge member is rotatable to the front hinge member, and thus making the temple member to perform folding/unfolding action. Eyeglasses with such hinge structure are light weighted, sharp looking, simple and stylish.

A variety of additional advantages of the invention will be set forth in part in the description which follows, and in part will be obvious from the description, or may be learned by practice of the invention. Various advantages of the invention will be realized and attained by means of the elements and combinations particularly point out in the claims. It is to be understood that both the foregoing general description and the following detailed description are exemplary and explanatory only and are not restrictive of the invention as claimed.

### Brief Description of the Drawings

Fig. 1A -1C illustrate a procedure of making a front hinge member of a hinge structure according to one embodiment of the present invention.
Fig. 1D is an enlarged view of the front hinge member according to one embodiment of the present invention.
Fig. 2A - 2D illustrate a procedure of making a rear hinge member of a hinge structure according to one embodiment of the present invention.
Fig. 3A - 3B show a washer with two spherical protruded end faces according to one embodiment of the present invention.
Fig. 4 is a perspective view of a hinge structure before assembling according to one embodiment of the present invention.
Fig. 5 is a perspective view of the hinge structure after assembling according to one embodiment of the present invention.
Fig. 6 is a perspective view of eyeglasses having hinge structures according to one embodiment of the present invention.
Fig. 6A is an enlarged view of one disassembled hinge structure shown in Fig. 6

### Detailed Description of the Preferred Embodiment

In the following description of the specific embodiments, reference is made to the accompanying drawings which form a part hereof, and in which is shown by way of illustration the specific embodiments in which the invention may be practiced. It is understood that other embodiments may be utilized as structural changes may be made without departing from the scope of the present invention.

This invention provides a screwless hinge structure that connects a front or lens rim and a temple member together in eyeglasses. In one embodiment, the hinge structure comprises a front hinge member having circular projections at one end and being secured to the front or lens rim at the other end, and a rear hinge member provided at one end of the temple member having eyelets corresponding to the circular projections. The rear hinge member has a slot therein at the one end of the temple member.

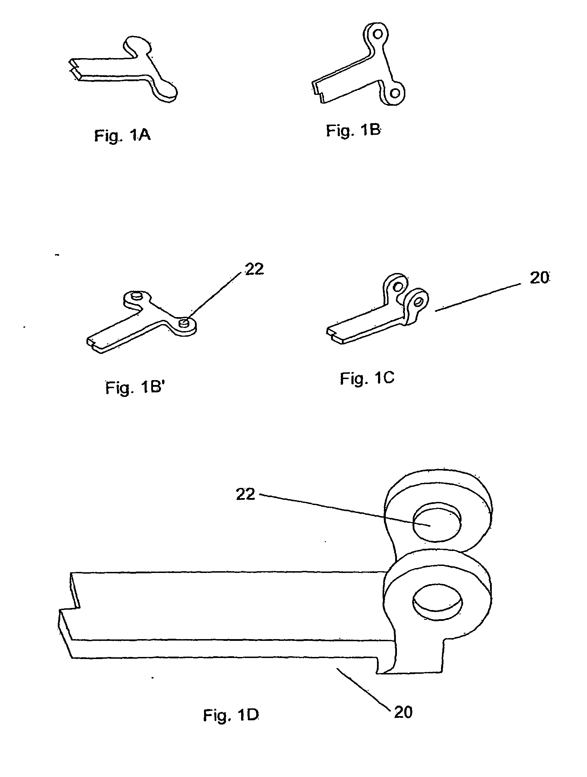

Referring now to the drawings, Figs. 1A-1D show the front hinge member of the hinge structure, in which Figs. 1A-1C illustrate the procedure of malting a front hinge member, while Fig. 1D is an enlarged view of a finished front hinge member. The front hinge member 20 is secured to a front or lens rim at one end. The front hinge member 20 and the lens rim are made in one piece of metal, and the front hinge member 20 is cut by a linear cutter to a shape as shown in Fig. 1A. This method of forming the front hinge member 20 is simple and precise. It is understood that other methods of forming the front hinge member 20, e.g., punching, can also be used for mass production. After shaping, the front hinge member 20 is then pressed by partially deforming the metal to form two projections 22 in the front face (see Fig. 1B'), with two recesses seen in the back (see Fig. 1B). The two projections 22 are in circular. Thereafter, the front hinge member 20 is bended with the two projections 22 turning inwardly to face to each other, as shown in Figs. 1C and 1D. Thus, a front hinge member 20 is finished which can couple with a rear hinge member to form a hinge structure of the present invention.

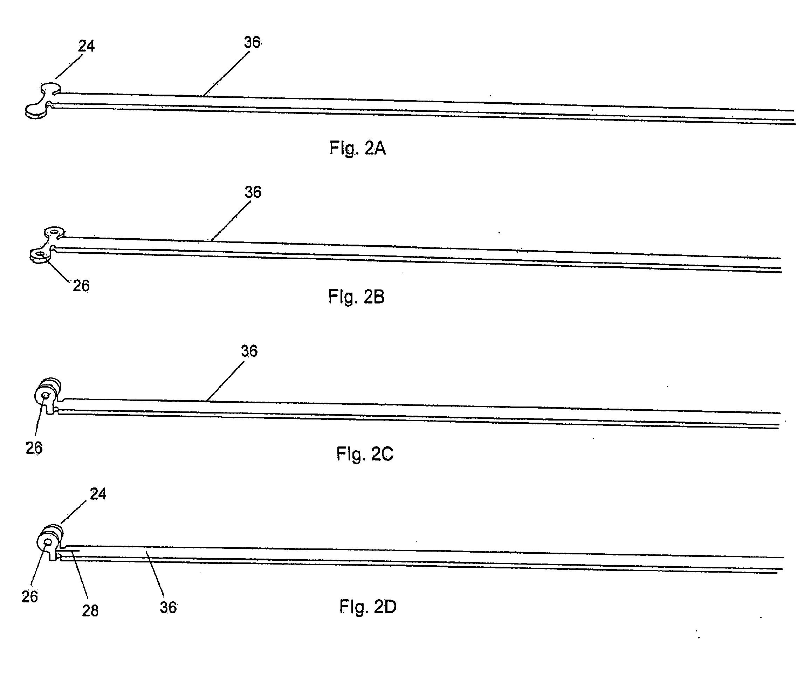

To form the rear hinge member, the following steps will be taken with Figs. 2A - 2D for detailed description. The rear hinge member 24 is provided at one end of the temple 36. The rear hinge member 24 and the temple member 36 are made in one piece of metal, and the rear hinge member 24 is cut by a linear cutter to a shape as shown in Fig. 2A. This method of forming the rear hinge member 24 is simple and precise. However, other methods such as punching, can also be used for mass production. After the rear hinge member being shaped, two eyelets 26 will be punched by using a punching mold (see Fig. 2B). Thereafter, the portion with the two eyelets 26 will be bended to a degree that the two eyelets 26 face to each other (see Fig. 2C). Finally, a slot 28 will be formed by cutting in the middle of the rear hinge member 24, as shown in Fig. 2D. The slot may be 3.5 - 5.0mm long with 0.2 - 0.5mm wide. However, the slot 28 is not fixed to the above size. The length and width of the slot will be determined by flexibility and thickness of the metal, and will also take the convenience for assembling and the frame looking into consideration.

When assembling the front hinge member 20 and the rear hinge member 24 to form a hinge, the rear hinge member 24 is pressed to an elastic pretension state, so as to fit into the front hinge member 20, with the circular projections 22 coupling into the eyelets 26. With such structure, the rear hinge member 24 is rotatable to the front hinge member 20, so that the temple member can perform folding/unfolding action. In the present invention, the slot 28 is provided in the middle of the rear hinge member 24, so that the rear hinge member 24 has an even and sustained tension to keep the eyelets 26 portion in close contact with the circular projections 22 portion. This is because the metal material has a feature of elasticity. The hinge can be assembled within the elastic range of the metal material and then be used within the elastic range for a long time without deforming and/or twisting, and thus to prevent the front hinge member being loose contact with the rear hinge member after a certain time.

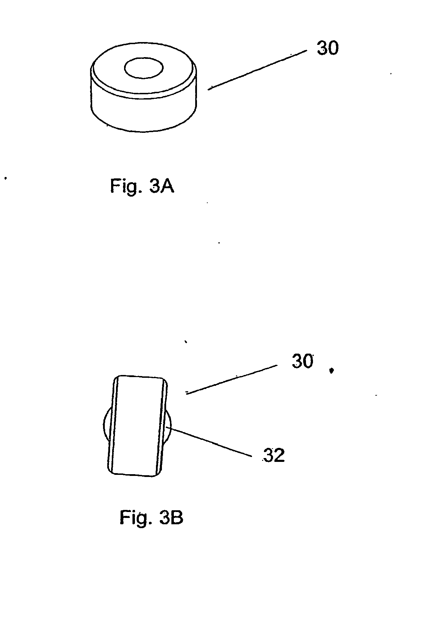

To further strengthen the hinge structure from deforming/twisting and to make the hinge look even better, a washer 30 (see Figs. 3A and 3B) is provide to support the hinge. The washer 30 can be a plastic washer. To prevent the plastic washer from slipping out when in use, the washer 30 has two spherical protruded end faces 32, each of which is coupled to the corresponding eyelet 26 of the rear hinge member 24, so as to hold the washer 30 in position.

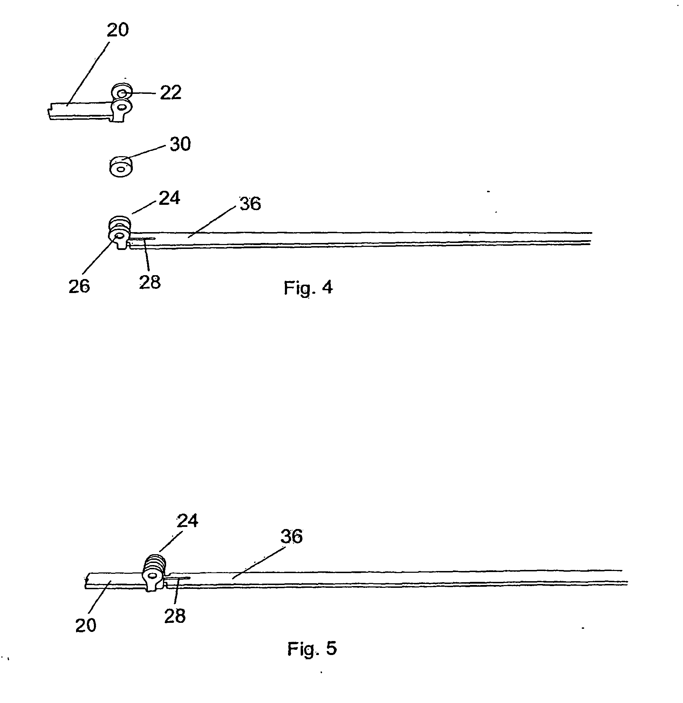

Fig. 4 shows the front hinge member 20, the plastic washer 30, and the rear hinge member 24 in a position before assembling together. When assembling, the rear hinge member 24 is pressed to fit into the front hinge member 20, with the circular projections 22 coupling into the eyelets 26. The plastic washer 30 is sandwiched between the two eyelets 26, with the two spherical protruded end faces 32 coupled with the two eyelets 26 to hold the washer 30 in position. Fig. 5 is a finished hinge structure with the rear hinge member 24 being rotatably connected to the front hinge member 20. With such structure, no screw or welding is needed for the hinge, and the hinge can be used for a long time with no deformation and/or twisting. Further, the hinge is small in size which will benefit the frame looking, and is easy for assembling. Furthermore, the hinge structure of the present invention is simple in manufacturing, with the front or lens rim and the front hinge member are made in one piece of metal, and the temple and the rear hinge member are made in one piece of metal. In addition, the plastic washer further enhances the strength of the hinge and prevents deforming/twisting.

The hinge structure of the present invention can be made of various metals, e.g., titanium, titanium alloy, stainless steel, and copper alloy. When a high friction coefficient material is used, such as titanium or titanium alloy, a stainless steel washer is further provided between the front hinge member and the rear hinge member to separate them from rubbing with each other. Preferably, the stainless steel washer has a thickness between 0.05mm - 0.3mm. Further, the hinge structure can be used in various spectacles frames, e.g., full-frame, half-frame, rimless frame, and plastic frame.

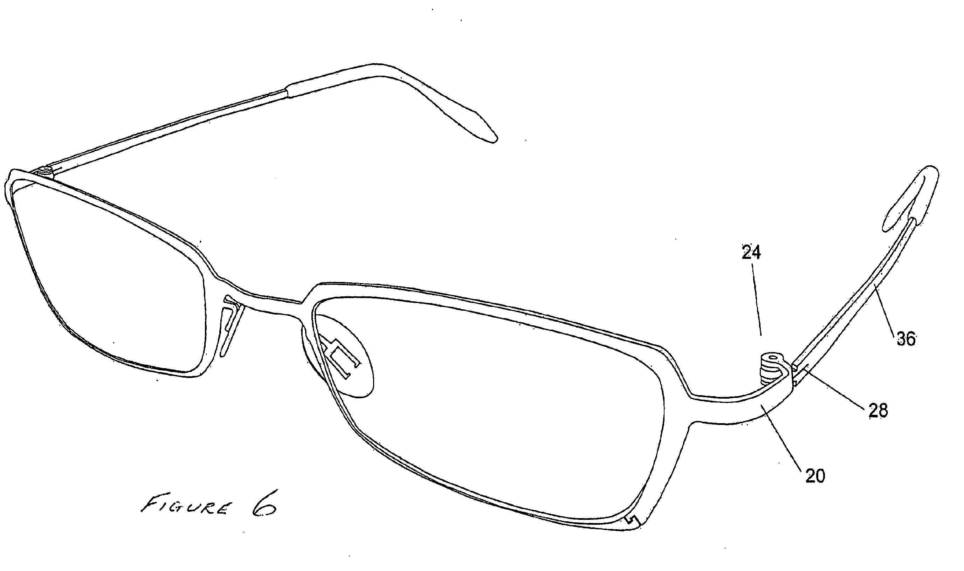

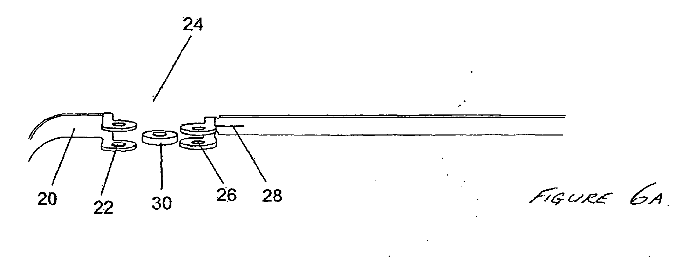

When a pair of eyeglasses use the screwless hinge structures 40 (see Figs. 6 and 6A), the eyeglasses further includes a pair of lens, and a frame having a front/lens rim for retaining the lens and engaging a nose of a wearer and a pair of temple members for elastically fitting to the wearer. The screwless hinge structure 40 connects the front/lens rim and the temple members 36, with the front hinge member 20 and the lens rim being cut with one piece of metal and the rear hinge member 24 and the temple member 36 being cut with one piece of metal.

The foregoing description of the preferred embodiment of the invention has been presented for the purposes of illustration and description. It is no intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A screwless hinge for spectacles comprising:
a front hinge member (20) arranged to be secured to a front frame portion of said spectacles and having two parallel lobes, two cylindrical projections (22) projecting towards each other from said jobes such as to define a hinge axis,
a temple member (36) comprising in its front end a longitudinally orientated slot (28) and on either side of said slot an eyelet arranged in parallel to said slot such as to form a rear binge member, said projections rotatably fitting into said eyelets such as to allow folding and unfolding of the temple member.

2. The hinge as claimed in claim 1, wherein the slot (28) lies mid-way between respective lateral edges of the base plate formed by the front end of the temple member.

3. The hinge as claimed in claim 1, wherein the slot is 3.5 - 5.0mm long and 0.2 - 0.5mm wide.

4. The hinge as claimed in claim 1, wherein a washer (30) is provided that is sandwiched between the eyelets (26) of the rear hinge member (24), to strengthen the hinge against deforming and/or twisting.

5. The hinge as claimed in claim 4, wherein the washer (30) is a plastic washer.

6. The hinge as claimed in claim 5, wherein the washer (30) has two spherical protruded end faces(32), each of which is coupled to the corresponding eyelet (26) of the rear hinge member (24).

7. The hinge as claimed in claim 1, wherein a stainless steel washer is further provided between the front hinge member and the rear hinge member.

8. The hinge as claimed in claim 7, wherein the stainless steel washer has a thickness of between 0.05 mm and 0.3mm.

9. The hinge as claimed in claim 7, wherein the components of the hinges are formed from a high friction coefficient material.

10. The hinge as claimed in claim 9, wherein the high friction coefficient material is titanium or titanium alloy.

11. Eyeglasses having screwless hinges each according to any preceding claim, the eyeglasses further comprising:
a pair of lenses, and
a frame having a front/lens rim for retaining the lens and engaging a nose of a wearer;
wherein each said screwless hinge rotatably joins the front/lens rim and said temple member together.

12. The eyeglasses as claimed in claim 11, wherein the eyeglass frame is made of a metal, the front/lens rim and the front hinge member are made in one piece of metal, and the temple member and the rear hinge member are made in one piece of metal.

13. The eyeglasses as claimed in claim 12, wherein the metal is titanium, titanium alloy, stainless steel, or copper alloy.

## Patentansprüche

1. Schraubenloses Scharnier für eine Brille mit :
einem vorderen Scharnierelement (20), welches geeignet angeordnet ist, um gegenüber einem vorderen Rahmenbereich der Brille befestigt oder gesichert zu werden und welches zwei parallele Lappen besitzt sowie zwei zylindrische Vorsprünge (22), die von jedem Lappen derart aufeinander zu vortreten, dass diese eine Scharnierachse definieren,
einen Bügel (36), der an seinem vorderen Ende einen in Längsrichtung orientierten Schlitz (28) besitzt sowie auf einer Seite oder beiden Seiten des Schlitzes ein Auge oder eine Öse, die derart parallel zu dem Schlitz angeordnet sind, dass diese ein hinteres Scharnierelement bilden, wobei die Vorsprünge drehbar derart in die Augen oder Ösen passen, dass ein Ein- und Ausklappen des Bügels ermöglicht ist.

2. Scharnier nach Anspruch 1, **dadurch gekennzeichnet, dass** der Schlitz (28) in der Mitte zwischen den Seitenkanten der Basisplatte liegt, die von dem vorderen Ende des Bügels gebildet ist.

3. Scharnier nach Anspruch 1, **dadurch gekennzeichnet, dass** der Schlitz 3.5-5.0 mm lang ist und 0.2-0.5 mm breit ist.

4. Scharnier nach Anspruch 1, **dadurch gekennzeichnet, dass** eine Scheibe (30) vorgesehen ist, die Sandwich-artig zwischen den Augen oder Ösen (26) des hinteren Scharnierelementes (24) aufgenommen ist oder hierzwischen eingeklemmt ist, um das Scharnier gegenüber einer Deformation und/oder einem Verdrillen zu stärken oder zu versteifen.

5. Scharnier nach Anspruch 4, **dadurch gekennzeichnet, dass** die Scheibe (30) eine Plastikscheibe ist.

6. Scharnier nach Anspruch 5, **dadurch gekennzeichnet, dass** die Scheibe (30) zwei sphärisch vorstehende Endflächen (32) besitzt, die jeweils mit dem korrespondierenden Auge oder der Öse (26) des hinteren Schamierelementes (24) gekoppelt sind.

7. Scharnier nach Anspruch 1, **dadurch gekennzeichnet, dass** eine Scheibe aus Edelstahl zwischen dem vorderen Scharnierelement und dem hinteren Scharnierelement vorgesehen ist.

8. Scharnier nach Anspruch 7, **dadurch gekennzeichnet, dass** die Scheibe aus Edelstahl eine Dicke von zwischen 0.05 mm und 0.3 mm besitzt.

9. Scharnier nach Anspruch 7, **dadurch gekennzeichnet, dass** die Komponenten des Scharnieres mit einem Material mit einem großen Reibkoeffizienten gebildet sind.

10. Scharnier nach Anspruch 9, **dadurch gekennzeichnet, dass** das Material mit einem großen Reibkoeffizienten Titan oder eine Titanlegierung ist.

11. Brille mit schraubenlosen Scharnieren entsprechend einem der vorhergehenden Ansprüche, wobei die Brille aufweist:
ein Paar von Linsen oder Gläsern,
einen Rahmen mit einer Vorderseite/einer Fassung für die Gläser zum Halten der Gläser und zum Eingreifen oder zur Wechselwirkung mit einer Nase einer die Brille tragenden Person;
wobei jedes schraubenlose Scharnier drehbar die Vorderseite oder die Fassung und das
Bügeielement miteinander verbindet.

12. Brille nach Anspruch 11, **dadurch gekennzeichnet, dass** der Rahmen der Brille mit einem Metall hergestellt ist und die Vorderseite/Fassung und das vordere Scharnierelement aus einem einzigen Metallstück hergestellt sind und der Bügel und das hintere Scharnierelement aus einem einzigen Metallstück hergestellt sind.

13. Brille nach Anspruch 12, **dadurch gekennzeichnet, dass** das Metall Titan, eine Titanlegierung, Edelstahl oder eine Kupferlegierung ist.

## Revendications

1. Charnière sans vis pour lunettes comprenant :
un élément de charnière avant (20) agencé de manière à être fixé sur une partie de monture avant desdites lunettes et comportant deux lobes parallèles, deux saillies cylindriques (22) faisant saillie l'une vers l'autre à partir desdits lobes de manière à définir un axe d'articulation,
un élément formant branche (36) comprenant, sur son extrémité avant, une fente orientée longitudinalement (28) et, de part et d'autre de ladite fente, un oeillet agencé parallèlement à ladite fente de manière à former un élément de charnière arrière, lesdites saillies s'insérant tournante dans lesdits oeillets de manière à permettre le pliage et le dépliage dudit élément formant branche.

2. Charnière selon la revendication 1, dans laquelle la fente (28) se situe au centre entre les bords latéraux respectifs de la plaque de base formée par l'extrémité avant de l'élément formant branche.

3. Charnière selon la revendication 1, dans laquelle la fente mesure de 3,5 à 5,0 mm de long et de 0,2 à 0,5 mm de large.

4. Charnière selon la revendication 1, dans laquelle une rondelle (30) est prévue, laquelle est prise en sandwich entre les oeillets (26) de l'élément de charnière arrière (24) afin de renforcer la charnière contre la déformation et/ou la torsion.

5. Charnière selon la revendication 4, dans laquelle la rondelle (30) est une rondelle en plastique.

6. Charnière selon la revendication 5, dans laquelle la rondelle (30) présente deux faces d'extrémité (32) saillantes sphériques, chacune étant couplée à l'oeillet (26) correspondant de l'élément de charnière arrière (24).

7. Charnière selon la revendication 1, dans laquelle une rondelle en acier inoxydable est en outre prévue entre l'élément de charnière avant et l'élément de charnière arrière.

8. Charnière selon la revendication 7, dans laquelle la rondelle en acier inoxydable présente urne épaisseur comprise entre 0,05 mm et 0,3 mm.

9. Charnière selon la revendication 7, dans laquelle les composants de la charnière sont formés à partir d'un matériau à coefficient de frottement élevé.

10. Charnière selon la revendication 9, dans laquelle le matériau à coefficient de frottement élevé est du titane ou un alliage de titane.

11. Lunettes comportant des charnières sans vis selon l'une quelconque des revendications précédentes, les lunettes comprenant en outre :
une paire de verres, et
une monture ayant un bord de verre avant destiné à retenir le verre et à venir en prise avec le nez d'un utilisateur ;
dans lesquelles chacune desdites charnières sans vis joint par rotation le bord de verre avant et ledit élément formant branche.

12. Lunettes selon la revendication 11, dans lesquelles la monture de lunettes est réalisée dans un métal, le bord de verre avant et l'élément de charnière avant sont réalisés d'un seul tenant dans un métal, et l'élément formant branche et l'élément de charnière arrière sont réalisés d'un seul tenant dans un métal.

13. Lunettes selon la revendication 12, dans lesquelles le métal est du titane, un alliage de titane, de l'acier inoxydable ou un alliage de cuivre.
